# EUROPÄISCHE PATENTSCHRIFT

(11) **EP 0 696 170 B1**
(45) Veröffentlichungstag und Bekanntmachung des Hinweises auf die Patenterteilung: **26.05.1999**
(21) Anmeldenummer: 95909768.4
(22) Anmeldetag: 22.02.1995
(51) Int. Cl.: A01N 43/24

(54) **WÄSSRIGE SUSPENSIONSKONZENTRATE VON ENDOSULFAN**
AQUEOUS ENDOSULPHAN SUSPENSION CONCENTRATES
CONCENTRES AQUEUX D'ENDOSULFANE EN SUSPENSION

(30) Priorität: 01.03.1994 DE 4406629
(43) Veröffentlichungstag der Anmeldung: 14.02.1996
(73) Patentinhaber: Hoechst Schering AgrEvo GmbH, 13509 Berlin (DE)
(72) Erfinder: FRISCH, Gerhard, D-61273 Wehrheim (DE); MAIER, Thomas, D-65710 Hofheim (DE)
(86) Internationale Anmeldenummer: EP9500641
(87) Internationale Veröffentlichungsnummer: WO9523508

(56) Entgegenhaltungen:
- EP-A- 0 110 174
- EP-A- 0 224 845
- DE-A- 3 210 869
- DE-A- 3 302 648
- DE-A- 3 702 604

## Beschreibung

Die vorliegende Erfindung betrifft Flüssigformulierungen von Endosulfan in Form von Suspensionskonzentraten.

Endosulfan [(1,4,5,6,7,7-hexachloro-8,9,10-trinorborn-5-en-2,3-ylenbismethylen)sulfit] ist bekanntlich ein Wirkstoff mit insektizider Wirkung (siehe US-Patent 2 799 685). Der Wirkstoff kann auf verschiedene Weise formuliert werden, so als emulgierbares Konzentrat (EC), Spritzpulver (WP), wasserdispergierbares Granulat (WG), konzentrierte wäßrige Emulsion (EW) und schließlich auch als Suspensionskonzentrat (SC). Die Vorteile bei SC-Formulierungen sind vor allem keine Staubentwicklung und das Nichtvorhandensein von brennbaren Lösungsmitteln, wobei sich letzteres vor allem positiv auf die dermale Anwendertoxizität auswirken kann.

Aus US-Patent 4 804 399 ist eine SC-Formulierung von Endosulfan bekannt, die neben dem Wirkstoff ein Sulfobernsteinsäurehalbester-Alkalisalz sowie ein Alkalisalz einer Ligninsulfonsäure im Gemisch mit einem quellfähigen Erdalkalisilikat enthält. Diese SC-Formulierung weist eine vergleichbare hohe Viskosität (> 400 mPas) auf. Zu dem enthält sie Hilfsstoffe, die nicht die Anforderungen der Enviromental Protection Agency (EPA) an Hilfsstoffe erfüllen (Exempt from tolerance under EPA Regulation 40 CFR 180.1001, c, d).

Es ist daher als überraschend anzusehen, daß es gelungen ist, eine Tensidkombination von EPA-konformen Hilfsstoffen zu finden, die eine stabile SC-Formulierung von Endosulfan mit besonders niedriger Viskosität ergibt. Diese wäßrige SC-Formulierungen decken weiterhin einen weiten Konzentrationsbereich an suspendierter Aktivsubstanz ab, was umso erstaunlicher ist, wenn man das hohe spezifische Gewicht von Endosulfan (1,8 g/cm³) in Betracht zieht, das deutlich höher liegt als bei vergleichbaren Wirkstoffen für SC-Formulierungen, wie Isoproturon (1,2 g/cm³), Linuron (1,5 g/cm³) und Carbendazim (1,5 g/cm³).

Die Erfindung betrifft daher wäßrige Suspensionskonzentrate von Endosulfan, die eine Tensidkombination aus (1) einem neutralisierten Phosphorsäureester auf Basis eines ethoxylierten Alkylphenols und (2) einem ethoxylierten Alkylaryl- und Alkoholphosphatester, wobei die Konzentration an Wirkstoff vorzugsweise 50 bis 650 g/l, insbesondere 300 bis 500 g/l beträgt.

Die erfindungsgemäße Kombination der obengenannten Tensidkomponente (1), die als ®Emcol CS 1361 (Witco Corp.) mit der obengenannten Tensidkomponente (2) mit vorzugsweise 9EO, die als ®Soprophor PA19 (Rhône Poulenc) im Handel erhältlich ist, ist dabei für Mahlbarkeit bei der Herstellung des erfindungsgemäßen Konzentrats und für dessen Lagerstabilität von essentieller Bedeutung. Diese Tensidmischung, in der das Gewichtsverhältnis der Komponenten (1) und (2) von 100:1 bis 1:100, vorzugsweise 10:1 bis 1:10, insbesondere 3:1 bis 1:3 variieren kann, unterdrückt zudem deutlich das Kristallwachstum, was zusätzlich zur Stabilität dieser SC-Formulierung über Lagerzeiten ≥ 3 Monaten bei Temperaturen von -10°C bis + 50°C beiträgt.

Der Gehalt an dieser Tensidkombination beträgt vorzugsweise 1 bis 30 Gew.-%, insbesondere 2 bis 15 Gew.-%.

Der erfindungsgemäßen SC-Formulierung können weitere Zusatz- oder Hilfsstoffe, vorzugsweise ausgewählt aus der Gruppe der Entschäumer, Antifrostmittel, Erdalkalisilikate, Verdicker, Konservierungsmittel, Netz- und Dispergiermittel zugesetzt werden.

Die SC-Formulierung enthält vorzugsweise zusätzlich 0,2 bis 3 Gew.-% Entschäumer, 0 bis 12 Gew.-% Antifrostmittel, 0,5 bis 10 Gew.-% Erdalkalisilikat, 0 bis 0,2 Gew.-% Verdicker, 0 bis 2 Gew.-% Konservierungsmittel und 0 bis 3 Gew.-% übliche Netz- und Dispergiermittel.

Übliche Netz- und Dispergiermittel sind beispielsweise polyoxethylierte Alkylphenole, polyoxethylierte Fettalkohole, Tridecylalkoholpolyglykolether (®Genapol X-080), Alkyl- oder Alkylphenylsulfonate, ligninsulfonsaures Natrium, 2,2'-dinaphthylmethan-6,6'-disulfon-saures Natrium, dibutylnaphthalinsulfonsaures Natrium oder oleylmethyltaurinsaures Natrium.

Geeignete Quellmittel sind zum Beispiel quellfähige Alumosilikate oder quellfähige Polysaccharide, wie solche, die durch Fermentation von Kohlehydraten mittels Xanthomonas-Mikroorganismen hergestellt werden wie ®Kelzan, vorhanden sein.

Ferner können als Formulierungshilfsmittel Entschäumer auf der Basis von Tributylphosphat oder auf Silicon-Basis wie Dialkylpolysiloxane und Antifrostmittel wie Ethylenglykol, Propylenglykol, Glycerin, insbesondere Propylenglykol, Safener wie beispielsweise Harnstoff und übliche Konservierungsmittel wie Benzoesäure, Sorbinsäure, Formaldehyd, Spuren fungizider Wirkstoffe u.a. zugegeben werden.

Die Erfindung betrifft auch ein Verfahren zur Herstellung des erfindungsgemäßen Suspensionskonzentrats, das dadurch gekennzeichnet ist, daß man den Wirkstoff in einer wäßrigen Lösung oder Suspension der Formulierungshilfsmittel verrührt und die erhaltene grobteilige Suspension anschließend durch Vermahlen zerkleinert, gegebenenfalls durch Vermahlen in einer Korund- oder Zahnscheibenmühle auf Feinheiten von ca. 200 Micron und anschließend in Reibkugelmühlen oder Sandmühlen, bis die Partikel der Suspension in Teilchengrößen von 0,1 bis 10 Micron, vorzugsweise unter 5 Micron vorliegen. Die Teilchengrößen können mittels einer Scheibenzentrifuge oder einem Coulter-Counter-Zählgerät bestimmt werden.

Die Viskositäten der erfindungsgemäßen SC-Formulierungen betragen bei Stufe 15: 40 - 60 mPas, bei Stufe 1: 60 - 100 mPas. Im Vergleich dazu betragen jene der aus US-Patent 4 804 399 bekannten SC-Formulierungen bei Stufe 15: 130 - 180 mPas, bei Stufe 1: 610 - 660 mPas. (Diese Werte wurden jeweils mit einem Rotationsviskosimeter ®Rheomat 115 der Firma Contraves bei 20°C gemessen.) Aufgrund der niedrigen Viskosität ist die Spontanität dieser SC-Formulierungen beim Verdünnen mit Wasser hervorragend.

Die Erfindung betrifft auch ein Verfahren zur Bekämpfung von Schadinsekten, das dadurch gekennzeichnet ist, daß man auf diese bzw. die von ihnen befallenen Pflanzen und Böden in Form einer wäßrigen Verdünnung eine wirksame Menge des obengenannten SC-Konzentrats aufbringt, und die Verwendung des SC-Konzentrats im Pflanzenschutz.

Die Applikation der erfindungsgemäßen Mittel erfolgt auf einfache Weise dadurch, daß man die Suspensionskonzentrate mit der gewünschten Menge Wasser verdünnt, kurz verrührt und auf die Pflanze appliziert. Die aus den erfindungsgemäßen Suspensionskonzentraten erhaltenen Spritzbrühen zeichnen sich gegenüber den aus Spritzpulvern oder emulgierbaren Konzentraten hergestellten Spritzbrühen insbesondere durch die gleichmäßige Verteilung des Wirkstoffes aus, die auch nach 24-stündigem Stehen noch erhalten bleibt.

Die vorliegende Erfindung wird durch nachfolgende Beispiele, die in Tabelle I zusammen gefaßt sind, erläutert, ohne daß die Erfindung auf diese beschränkt wäre. In Tabelle II sind Beispiele aufgeführt, bei denen ein Bestandteil der erfindungsgemäßen Tensidmischung ausgetauscht wurde, und die nicht lagerstabil sind.

**Tabelle I**

| (Angaben in Gew.-%) | | | | | | | | | | |
|---|---|---|---|---|---|---|---|---|---|---|
| | 1 | 2 | 3 | 4 | 5 | 6 | 7 | 8 | 9 | 10 |
| Endosulfan | 39,1 | 34,44 | 30,75 | 39,1 | 39,1 | 39,1 | 35,0 | 30,8 | 25,6 | 43,5 |
| ®Emcol CS 1361 | 4,0 | 3,36 | 3,00 | 2,0 | 4,0 | 4,0 | 3,6 | 3,5 | 3,0 | 5,0 |
| ®Soprophor PA-19 | 2,0 | 1,68 | 1,50 | 2,0 | 2,0 | 2,0 | 1,8 | 1,75 | 1,5 | 2,5 |
| ®Darvan No. 3 | 1,0 | 0,84 | 0,75 | 1,0 | 1,0 | 1,0 | 1,0 | 1,0 | 1,0 | 1,0 |
| ®Hostapon T | 0,5 | 0,42 | 0,38 | 0,5 | 0,5 | 0,5 | 0,5 | 0,5 | 0,5 | 0,5 |
| ®Attapulgite Select 615 | 2,0 | 3,68 | 3,50 | - | 3,0 | 5,0 | 2,0 | 2,5 | 4,0 | 3,0 |
| ®Rhodorsil 5020 | 2,0 | 1,68 | 1,50 | 2,0 | 2,0 | 2,0 | 2,0 | 2,0 | 2,0 | 2,0 |
| ®Propylenglykol | 8,0 | 6,72 | 6,00 | 8,0 | 8,0 | 7,0 | 8,0 | 8,0 | 10,0 | 9,0 |
| ®Rhodopol 23 | - | - | - | 0,1 | - | - | - | - | - | - |
| Konservierungsmittel | - | - | - | 0,1 | - | - | - | - | - | - |
| Wasser ad 100 % | | | | | | | | | | |
| ®Hostapon T (Hoechst AG) = Oleyl-N-methyltaurid Na-Salz ®Attapulgite Select 615 (Oil Dri Corp. USA) = Hydrophobiertes Al-Mg-silicat ®Rhodorsil 5020 (Rhone Poulenc) = Polydimethylsiloxan ®Darvan No. 3 (Vanderbilt Corp. USA) = Na-Salz einer polymerisierten, substituierten Alkyl-Aryl-Sulfonsäure mit einem inerten anorganischen Suspendiermittel. | | | | | | | | | | |

**Tabelle II**

| (Angaben in Gew.-%) | | | | | | | |
|---|---|---|---|---|---|---|---|
| | 1 | 2 | 3 | 4 | 5 | 6 | 7 |
| Endosulfan | 39,1 | 39,1 | 39,1 | 39,1 | 39,1 | 39,1 | 39,1 |
| ®Emcol CS 1361 | 4,0 | 4,0 | 4,0 | 4,0 | 4,0 | 4,0 | 2,0 |
| ®Nekal BX | - | 2,0 | 2,0 | - | - | - | - |
| ®Arkopal N 100 | - | - | - | 2,0 | - | - | - |
| ®Soprophor 860 P | - | - | - | - | 2,0 | - | - |
| ®Witco ECD 1742 | - | - | - | - | - | 2,0 | - |
| ®Darvan No. 3 | 1,0 | 1,0 | 1,0 | 1,0 | 1,0 | 1,0 | 1,0 |
| ®Hostapon T | 0,5 | 0,5 | 0,5 | 0,5 | 0,5 | 0,5 | 0,5 |
| ®Rhodorsil 5020 | 2,0 | 2,0 | 2,0 | 2,0 | 2,0 | 2.0 | 2,0 |
| ®Attapulgite Select 615 | 2,0 | 2,0 | - | 2,0 | 2,0 | 2,0 | - |
| ®Bentone EW | - | - | 0,5 | - | - | - | - |
| ®Rhodopol 23 | - | - | - | - | - | - | 0,2 |
| Propylenglykol | 8 | 8 | 8 | 8 | 8 | 8 | 8 |
| Wasser ad 100 % | | | | | | | |
| Bezüglich der hier im einzelnen nicht erläuterten Warenzeichen siehe: McCutcheon's Emulsifiers & Detergents, Vol. 1, **International Edition** | | | | | | | |

## Patentansprüche

1. Wäßriges Suspensionskonzentrat von Endosulfan, enthaltend eine Tensidkombination aus einem neutralisierten Phosphorsäureester auf Basis eine ethoxylierten Alkylphenols und einem ethoxylierten Alkylaryl- und Alkoholphosphatester.

2. Konzentrat gemäß Anspruch 1, welches 50 bis 650 g Endosulfan/l enthält.

3. Konzentrat gemäß Anspruch 1 oder 2, worin das Gewichtsverhältnis der beiden Komponenten der im Anspruch 1 definierten Tensidkombination 100:1 bis 1:100 beträgt.

4. Konzentrat gemäß einem der Ansprüche 1 bis 3, enthaltend 1 bis 30 Gew.-% der Tensidkombination.

5. Konzentrat gemäß einem der Ansprüche 1 bis 4, enthaltend 2 bis 15 Gew.-% der Tensidkombination.

6. Konzentrat gemäß einem der Ansprüche 1 bis 5, enthaltend weitere Zusatz- oder Hilfsstoffe vorzugsweise ausgewählt aus der Gruppe der Entschäumer, Antifrostmittel, Erdalkalisilikate, Verdicker, Konservierungsmittel, Netz- und Dispergiermittel.

7. Konzentrat gemäß einem der Ansprüche 1 bis 6, zusätzlich enthaltend 0,2 bis 3 Gew.-% Entschäumer, 0 bis 12 Gew.-% Antifrostmittel, 0,5 bis 10 Gew.-% Erdalkalisilikat, 0 bis 0,2 Gew.-% Verdicker, 0 bis 2 Gew.-% Konservierungsmittel und 0 bis 3 Gew.-% übliche Netz- und Dispergiermittel.

8. Verfahren zur Herstellung eines Konzentrats gemäß einem der Ansprüche 1 bis 6, dadurch gekennzeichnet, daß man den Wirkstoff in einer wäßrigen Lösung oder Suspension der Formulierungshilfsmittel verrührt und die erhaltene grobteilige Suspension anschließend durch Vermahlen zerkleinert.

9. Verfahren zur Bekämpfung von Schadinsekten, dadurch gekennzeichnet, daß man auf diese bzw. die von ihnen befallenen Pflanzen und Böden in Form einer wäßrigen Verdünnung eine wirksame Menge eines Konzentrats gemäß einem der Ansprüche 1 bis 7 aufbringt.

10. Verwendung eines Konzentrats gemäß einem der Ansprüche 1 bis 7 zum Einsatz im Pflanzenschutz.

## Claims

1. An aqueous suspension concentrate of endosulfan, comprising a surfactant combination of a neutralized phosphoric ester based on an ethoxylated alkylphenol and an ethoxylated alkylaryl and alcohol phosphate ester.

2. A concentrate as claimed in claim 1, comprising 50 to 650 g of endosulfan/l.

3. A concentrate as claimed in claim 1 or 2, in which the ratio by weight of the two components of the surfactant combination defined in claim 1 is 100:1 to 1:100.

4. A concentrate as claimed in any of claims 1 to 3, comprising 1 to 30% by weight of the surfactant combination.

5. A concentrate as claimed in any of claims 1 to 4, comprising 2 to 15% by weight of the surfactant combination.

6. A concentrate as claimed in any of claims 1 to 5, comprising further additives or auxiliaries preferably selected from the group of the antifoams, antifreeze agents, alkaline earth metal silicates, thickeners, preservatives, wetting agents and dispersants.

7. A concentrate as claimed in any of claims 1 to 6, additionally comprising 0.2 to 3% by weight of antifoam, 0 to 12% by weight of antifreeze agent, 0.5 to 10% by weight of alkaline earth metal silicate, 0 to 0.2% by weight of thickener, 0 to 2% by weight of preservative and 0 to 3% by weight of customary wetting agents and dispersants.

8. A process for the preparation of a concentrate as claimed in any of claims 1 to 6, which comprises stirring the active substance in an aqueous solution or suspension of the formulation auxiliaries and subsequently comminuting the resulting coarse suspension by grinding.

9. A method of controlling harmful insects, which comprises applying an effective amount of a concentrate as claimed in any of claims 1 to 7 in the form of an aqueous dilution to these harmful insects or to the plants and soils infested with them.

10. The use of a concentrate as claimed in any of claims 1 to 7 for use in crop protection.

## Revendications

1. Concentré aqueux d'endosulfan en suspension, contenant une combinaison d'agents tensioactifs provenant d'un ester d'acide phosphorique neutralisé à base d'un alkylphénol éthoxylé et d'un ester éthoxylé d'alkylaryl- et d'alcoolphosphate.

2. Concentré selon la revendication 1, qui renferme 50 à 650 g d'endosulfan/l.

3. Concentré selon la revendication 1 ou 2, dans lequel le rapport en poids des deux composants de la combinaison d'agents tensioactifs définie dans la revendication 1 est de 100:1 jusqu'à 1:100.

4. Concentré selon l'une des revendications 1 à 3, contenant 1 à 30% en poids de la combinaison d'agents tensioactifs.

5. Concentré selon l'une des revendications 1 à 4, contenant 2 à 15% en poids de la combinaison d'agents tensioactifs.

6. Concentré selon l'une des revendications 1 à 5, contenant en outre des additifs ou des adjuvants choisis de préférence parmi les antimoussants, les antigels, les silicates de métaux alcalino-terreux, les épaississants, les agents de conservation, les agents mouillants et de dispersion.

7. Concentré selon l'une des revendications 1 à 6, contenant en supplément 0,2 à 3% en poids d'antimoussant, 0 à 12% en poids d'antigel, 0,5 à 10% en poids de silicates de métaux alcalino-terreux, 0 à 0,2% en poids d'agent épaississant, 0 à 2% en poids d'agent de conservation et 0 à 3% en poids d'agents mouillants et dispersants usuels.

8. Procédé de préparation d'un concentré selon une des revendications 1 à 6, caractérisé en ce que l'on mélange la substance active dans une solution ou une suspension aqueuse des adjuvants de formulation et en ce qu'on concasse ensuite la suspension de particules grossières par broyage.

9. Procédé de lutte contre les insectes nuisibles, caractérisé en ce que l'on applique sur ceux-ci ou sur les plantes et les sols infectés par ceux-ci, une quantité efficace d'un concentré selon l'une des revendications 1 à 7, sous la forme d'une dilution aqueuse.

10. Utilisation d'un concentré selon l'une des revendications 1 à 7 appliqué à la protection des plantes.
